# EUROPEAN PATENT SPECIFICATION

(11) **EP 4 511 683 B1**
(45) Date of publication and mention of the grant of the patent: **16.09.2026**
(21) Application number: 23718840.4
(22) Date of filing: 29.03.2023
(51) Int. Cl.: G02B 5/12

(54) **RETROREFLECTIVE ARTICLE**
RETROREFLEKTIERENDER GEGENSTAND
ARTICLE RÉTRORÉFLÉCHISSANT

(30) Priority: 19.04.2022 US 202263363198 P
(43) Date of publication of application: 26.02.2025
(73) Proprietor: 3M Innovative Properties Company, Saint Paul, Minnesota 55133-3427 (US)
(72) Inventor: NG, Lok-Man, Taipei, 10682 (TW); NIWAS, Shri, Saint Paul, Minnesota 55133-3427 (US); XIA, Ying, Saint Paul, Minnesota 55133-3427 (US); MCCOY, Michael A., Saint Paul, Minnesota 55133-3427 (US); CHEN-HO, Kui, Saint Paul, Minnesota 55133-3427 (US)
(74) Representative: Vossius & Partner Patentanwälte Rechtsanwälte mbB
(86) International application number: PCT/IB2023/053140
(87) International publication number: WO 2023/203406

(56) References cited:
- WO-A1-2022/064347
- US-A- 4 637 950
- US-A- 5 378 520

## Description

### Technical Field

The present invention relates to a method of manufacturing a retroreflective article.

### Background

Retroreflective articles are used in a variety of applications. For example, the retroreflective articles are often used as high-visibility trims on garments and footwear to increase a visibility of a user wearing the garments and the footwear. The retroreflective articles are often added to garments that are worn by firefighters, rescue personnel, road workers, and the like.

WO 2022/064347 A1 discloses a breathable, high-visibility garment comprising discrete islands of unsupported, retroreflective laminate.

US 5,378,520 A discloses encapsulated-lens retroreflective sheeting which comprises i) a layer of binder material having a layer of retroreflective elements partially embedded in its top surface and ii) a transparent cover sheet disposed in spaced relation from the layer of retroreflective elements. The sheeting further comprises iii) a network of narrow intersecting bonds and iv) a support sheet lastingly and directly adhered to a bottom surface of the layer of binder material.

US 4,637,950 A discloses a cellular retroreflective sheeting, which comprises a base sheet of retroreflective elements and a polymeric cover film disposed in space relation from the base sheet by a network of narrow intersecting bonds that form hermetically sealed cells.

### Summary

The present invention relates to a method of manufacturing a retroreflective article as defined in independent claim 1. Further preferred embodiments of the method of the present invention are defined in the dependent claims. The following aspects, which also focus on the retroreflective article are useful for the understanding of the method of the present invention.

In a first aspect, the present disclosure provides a retroreflective article. The retroreflective article includes a mesh layer. The mesh layer includes a plurality of interconnected portions defining a plurality of enclosed openings therebetween, a first mesh major surface, and a second mesh major surface opposite to the first mesh major surface. The plurality of interconnected portions together form the first mesh major surface and the second mesh major surface. The retroreflective article further includes a bond layer including a plurality of bond portions at least partially spaced apart from each other by the mesh layer. Each of the plurality of bond portions is at least partially disposed within a corresponding enclosed opening from the plurality of enclosed openings and fixedly bonded to one or more adjacent interconnected portions from the plurality of interconnected portions of the mesh layer. The second mesh major surface is proximal to the bond layer. The retroreflective article further includes a plurality of sets of optical elements corresponding to the plurality of bond portions of the bond layer. Each of the sets of optical elements includes a plurality of optical elements partially embedded within a corresponding bond portion from the plurality of bond portions of the bond layer. The first mesh major surface is proximal to the sets of optical elements. The sets of optical elements are spaced apart from each other by the one or more interconnected portions of the mesh layer.

The present invention provides a method of manufacturing a retroreflective article. The method includes providing a carrier layer. The method further includes disposing a mesh layer on the carrier layer. The mesh layer includes a plurality of interconnected portions defining a plurality of enclosed openings therebetween, a first mesh major surface, and a second mesh major surface opposite to the first mesh major surface. The plurality of interconnected portions together form the first mesh major surface and the second mesh major surface. The first mesh major surface is disposed on the carrier layer. The method further includes disposing a plurality of optical elements within the plurality of enclosed openings of the mesh layer. The method further includes providing a reflective layer adjacent to a surface of at least some of the plurality of optical elements. The method further includes providing a bond layer at least partially on the reflective layer within the plurality of enclosed openings of the mesh layer, such that the plurality of optical elements is partially embedded within the bond layer. The bond layer fixedly bonds to the plurality of interconnected portions of the mesh layer.

### Brief Description of the Drawings

Exemplary embodiments disclosed herein may be more completely understood in consideration of the following detailed description in connection with the following figures. The figures are not necessarily drawn to scale. In particular, thicknesses of certain layers in proportion to certain other items are exaggerated for ease of illustration and clarity purposes. Like numbers used in the figures refer to like components. However, it will be understood that the use of a number to refer to a component in a given figure is not intended to limit the component in another figure labeled with the same number.
FIG. 1 is a schematic cross-sectional view of a retroreflective article according to an embodiment of the present disclosure;
FIG. 2 is a schematic perspective view of a mesh layer of the retroreflective article according to an embodiment of the present disclosure;
FIG. 3 is a schematic cross-sectional view of a retroreflective article according to another embodiment of the present disclosure;
FIG. 4 is a schematic front view of a garment including the retroreflective article according to an embodiment of the present disclosure;
FIG. 5 is a flowchart depicting various steps of a method of manufacturing a retroreflective article according to an embodiment of the present disclosure; and
FIGS. 6A-6H are schematic views depicting various steps of the method of manufacturing the retroreflective according to an embodiment of the present disclosure.

### Detailed Description

In the following description, reference is made to the accompanying figures that form a part thereof and in which various embodiments are shown by way of illustration. It is to be understood that other embodiments are contemplated and may be made without departing from the scope of the present invention as defined in the claims. The following detailed description, therefore, is not to be taken in a limiting sense.

In the following disclosure, the following definitions are adopted.

As recited herein, all numbers should be considered modified by the term "about". As used herein, "a," "an," "the," "at least one," and "one or more" are used interchangeably.

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties).

The term "substantially", unless otherwise specifically defined, means to a high degree of approximation (e.g., within +/- 10% for quantifiable properties) but again without requiring absolute precision or a perfect match.

The term "about", unless otherwise specifically defined, means to a high degree of approximation (e.g., within +/- 5% for quantifiable properties) but again without requiring absolute precision or a perfect match.

Terms such as same, equal, uniform, constant, strictly, and the like, are understood to be within the usual tolerances or measuring error applicable to the particular circumstance rather than requiring absolute precision or a perfect match.

As used herein, the terms "first" and "second" are used as identifiers. Therefore, such terms should not be construed as limiting of this disclosure. The terms "first" and "second" when used in conjunction with a feature or an element can be interchanged throughout the embodiments of this disclosure.

As used herein, when a first material is termed as "similar" to a second material, at least 90 weight % of the first and second materials are identical and any variation between the first and second materials comprises less than about 10 weight % of each of the first and second materials.

As used herein, "at least one of A and B" should be understood to mean "only A, only B, or both A and B".

Unless specified or limited otherwise, the terms "attached," "connected," and variations thereof, are used broadly and encompass both direct and indirect attachments, connections, and couplings.

As used herein, the term "adjacent" refers to elements that are in proximity to each other, usually in contact with each other, but may have intervening elements between them.

As used herein, the term "configured to" and like is at least as restrictive as the term "adapted to" and requires actual design intention to perform the specified function rather than mere physical capability of performing such a function.

As used herein, the term "at least partially" refers to any percentage greater than 1%. In other words, the term "at least partially" refers to any amount of a whole. For example, "at least partially" may refer to a small portion, half, or a selected portion of a whole. In some examples, "at least partially" may refer to a whole amount. The term "partially" refers to any percentage less than 100%.

As used herein, the term "spaced apart" refers to elements that are disposed at a distance from one another. A plurality of elements spaced apart from each other means that adjacent elements from the plurality of elements are disposed at a distance from one another. A plurality of elements at least partially spaced apart from each other means that at least portions of adjacent elements from the plurality of elements are disposed at a distance from one another.

As used herein, the term "retroreflective" refers to the attribute of reflecting an obliquely incident light ray in a direction antiparallel to its incident direction, or nearly so, such that it returns to the light source or an immediate vicinity thereof.

As used herein, the term "fixedly bonded" refers to two or more elements being attached to each other so that they are not intended to be separated or disconnected during normal use.

As used herein, the term "mesh layer" refers to a layer of an apertured material. A mesh layer may include cords, wires, or threads woven into a network defining apertures or openings, or a sheet or a film having apertures or openings cut, punched, or otherwise formed therein.

As used herein, the term "percent open area" refers to a percentage of an area of the mesh layer that is taken up by an open area of the apertures or openings.

The term "microsphere" or "microspheres" refers to either a population of micron size particles, or an individual particle, depending upon the context in which the word is used, which has a high sphericity measurement. The sphericity measurement of a population of microspheres may be in the range of about 80% to about 100%, with 95% being typical. The microspheres are substantially spherical, although a microsphere population may include some individual particles that have a lower sphericity measurement.

As used herein, the term "median diameter" refers to a diameter distribution where 50% of the particles are smaller than a given value.

As used herein, the term "garment" refers to an item that, in normal use, is to be donned and worn by a user. The term "garment" excludes any item that is itself to be attached to a garment.

As used herein, the term "external surface" of a garment refers to a surface, much or all of which is visible when the garment is worn.

As used herein, the term "elastomer" is defined as a polymer having an ability to be stretched to at least twice its original length and to retract to approximately its original length when released, (definition taken from "Hawley's Condensed Chemical Dictionary", R. J. Lewis Sr. Ed., 12th Ed., Van Nostrand Reinhold Co., New York, N.Y. (1993)).

The present disclosure relates to a retroreflective article and a method of manufacturing the retroreflective article. The retroreflective article includes a mesh layer. The mesh layer includes a plurality of interconnected portions defining a plurality of enclosed openings therebetween, a first mesh major surface, and a second mesh major surface opposite to the first mesh major surface. The plurality of interconnected portions together form the first mesh major surface and the second mesh major surface. The retroreflective article further includes a bond layer including a plurality of bond portions at least partially spaced apart from each other by the mesh layer. Each of the plurality of bond portions is at least partially disposed within a corresponding enclosed opening from the plurality of enclosed openings and fixedly bonded to one or more adjacent interconnected portions from the plurality of interconnected portions of the mesh layer. The second mesh major surface is proximal to the bond layer. The retroreflective article further includes a plurality of sets of optical elements corresponding to the plurality of bond portions of the bond layer. Each of the sets of optical elements includes a plurality of optical elements partially embedded within a corresponding bond portion from the plurality of bond portions of the bond layer. The first mesh major surface is proximal to the sets of optical elements. The sets of optical elements are spaced apart from each other by the one or more interconnected portions of the mesh layer.

The mesh layer of the retroreflective article of the present disclosure is disposed between the plurality of bond portions and the plurality of sets of optical elements. As a result, the retroreflective article may be very thin (e.g., have a thickness of about 0.25 millimeters (mm), or about 0.20 mm, or about 0.15 mm, or about 0.10 mm, or about 0.05 mm). In some cases, the retroreflective article may be as thin as the mesh layer. Such low thickness may provide a good/soft hand feel and high drapability to the retroreflective article. Further, the mesh layer may form a portion of an external surface of a garment to which the retroreflective article is attached. Consequently, the mesh layer may provide physical support and excellent abrasion resistance to the retroreflective article.

In some examples, the mesh layer includes a mesh fabric. The mesh fabric may have hydrophobic (water repellent), lipophobic (oil repellent), or wicking properties. As a result, the mesh fabric may dry quickly. The mesh fabric may have a fluorescent color in order to increase visibility of the retroreflective article and a garment to which the retroreflective article may be attached. The mesh fabric may further impart various other advantageous properties to the retroreflective article.

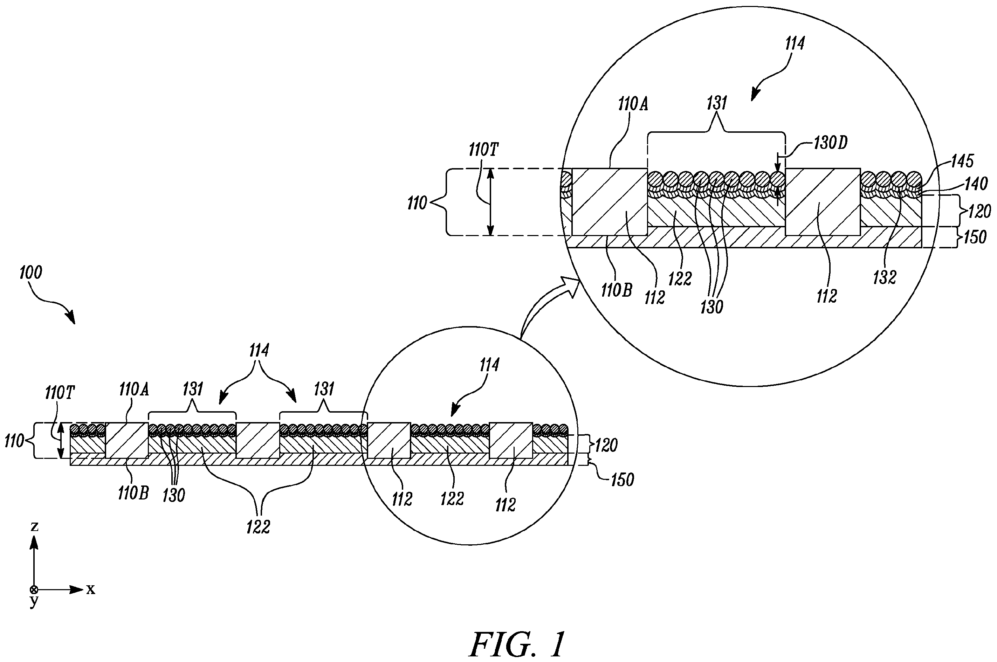

Referring now to Figures, FIG. 1 illustrates a schematic cross-sectional view of a retroreflective article 100 according to an embodiment of the present disclosure.

The retroreflective article 100 defines mutually orthogonal x, y, and z-axes. The x-axis is defined along a length of the retroreflective article 100, while the y-axis is defined along a breadth of the retroreflective article 100. The z-axis is defined along a thickness of the retroreflective article 100.

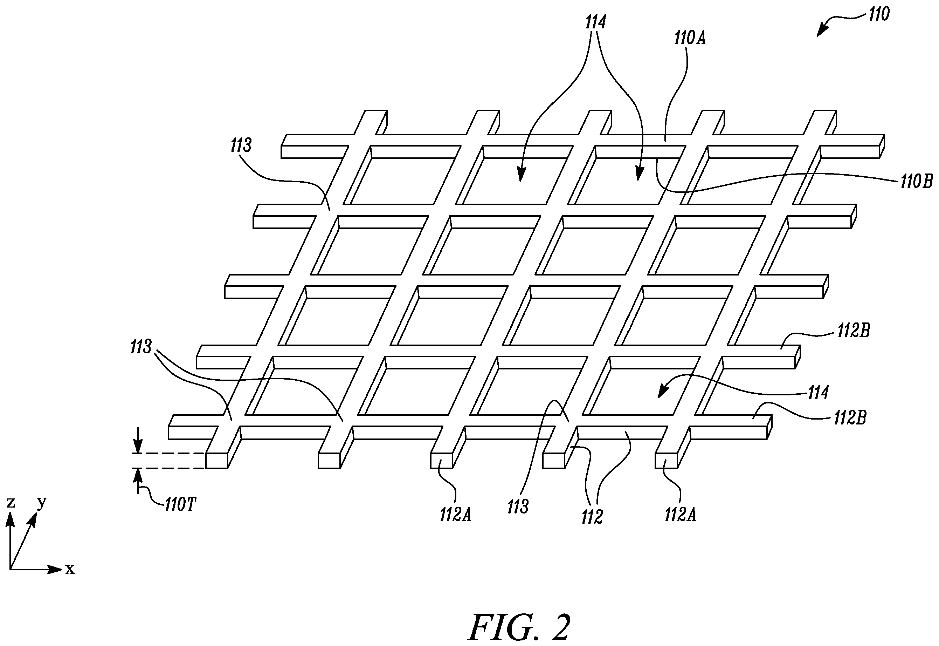

The retroreflective article 100 includes a mesh layer 110. The mesh layer 110 is also shown in FIG. 2. Referring to FIGS. 1 and 2, the mesh layer 110 includes a plurality of interconnected portions 112 defining a plurality of enclosed openings 114 (best shown in FIG. 2) therebetween. The mesh layer 110 may include any apertured structure, i.e., a structure including a plurality of apertures (i.e., the plurality of enclosed openings 114).

In some cases, such apertured structure may inherently include the plurality of enclosed openings 114 from a process of manufacturing, and may not necessarily require any kind of post-processing to form the plurality of enclosed openings 114. In some other cases, the plurality of enclosed openings 114 may be formed on a structure by way of a post-process, e.g., mechanical perforation (e.g., by die-cutting), water-jet cutting, laser-cutting, needle-punching, and so forth. In such cases, a shape of the plurality of enclosed openings 114 may be established by a particular method and equipment used, e.g., round, oval, square, hexagonal, and so forth. In an example, the mesh layer 110 may include cords, wires, or threads woven into a network defining the plurality of enclosed openings 114. In another example, the mesh layer 110 may include a sheet or a film having the plurality of enclosed openings 114 cut, punched, or otherwise formed therein. For example, the mesh layer 110 may include a perforated polymer film including, for example, polyester (e.g., polyethylene terephthalate), polyamide (e.g., hexamethylene adipamide, polycaprolactam), polypropylene, acrylic, cellulose acetate, polyvinylidene chloride-vinyl chloride copolymers, and/or vinyl chloride-acrylonitrile copolymers. Perforation may be provided by die punching, needle punching, knife cutting, laser perforating, and slitting as described in U. S. Pat. Nos. 9,168,636 (Wald et al.) and 9,138,031 (Wood et al.), for example. Perforation may also be provided by applying a flame, a heat source, or pressurized fluid, as described in U. S. Patent Application No 2016/0009048 Al (Slama et al.) and U. S. Pat. No. 7,037,100 (Strobel et al.), for example.

As shown in FIG. 2, in some embodiments, the plurality of interconnected portions 112 may include a set of first members 112A oriented in a first direction. The plurality of interconnected portions 112 may further include a set of second members 112B oriented in a second direction different from the first direction. The first and second members 112A, 112B may meet at junctions 113. In the illustrated embodiment of FIG. 2, each of the set of first members 112A is oriented substantially along the y-axis. Further, each of the set of second members 112B is oriented substantially along the x-axis. Consequently, each of the plurality of enclosed openings 114 is substantially rectangular in FIG. 2. However, the plurality of interconnected portions 112 may include any number of members, in any suitable configuration, to define the plurality of enclosed openings 114 that are, for example, circular, lozenge (e.g., diamond shaped), pentagonal, hexagonal, etc. In other words, many variations of the mesh layer 110 are possible, which involve members, such as the first and second members 112A, 112B, that are oriented in more than two directions, members that meet at relatively complex junctions as compared to the junctions 113 of FIG. 2, and so forth.

In some embodiments, the mesh layer 110 has a percent open area of at least 70%. In other words, in some embodiments, the plurality of enclosed openings 114 may occupy at least 70% of a total area of the mesh layer 110. In one example, the plurality of enclosed openings 114 may occupy 75% of the total area of the mesh layer 110, and the plurality of interconnected portions 112 may occupy 25% of the total area of the mesh layer 110.

The mesh layer 110 further includes a first mesh major surface 110A and a second mesh major surface 110B opposite to the first mesh major surface 110A. Specifically, the plurality of interconnected portions 112 together form the first mesh major surface 110A and the second mesh major surface 110B. In other words, the first mesh major surface 110A and the second mesh major surface 110B are collectively formed by the plurality of interconnected portions 112.

The mesh layer 110 defines a thickness 110T between the first mesh major surface 110A and the second mesh major surface 110B along the z-axis. In some embodiments, the mesh layer 110 has the thickness 110T from 0.05 mm to about 2.5 mm. The thickness 110T is shown to be uniform in FIGS. 1 and 2, however, the thickness 110T of the mesh layer 110 may vary along a length (along the x-axis) and/or a breadth (along the y-axis) of the mesh layer 110. In some examples, the thickness 110T of the mesh layer 110 may vary from about 0.05 mm to about 2.5 mm along the length and/or the breadth of the mesh layer 110.

The mesh layer 110 may be naturally colored (e.g., in a color of a material from which the mesh layer 110 is made), or artificially colored. In some embodiments, the mesh layer 110 has a colorant. In other words, in some embodiments, the mesh layer 110 is colored (to a desired color) by the colorant. Preferably, the mesh layer 110 may have a fluorescent color (either naturally or artificially). As a result, the mesh layer 110 may exhibit a luminance (minimum luminance factor) that meets the criteria set out in ANSI 107-2015. The fluorescent color may improve a visibility of the retroreflective article 100 and a garment to which the retroreflective article 100 may be attached.

The mesh layer 110 may impart various advantageous properties to the retroreflective article 100. For example, the mesh layer 110 may have hydrophobic (water repellent), lipophobic (oil repellent), or wicking properties. As a result, the mesh layer 110 may dry quickly. In another example, the mesh layer 110 may be flame retardant (to prevent or slow growth of fire). In another example, the mesh layer 110 may be elastic (e.g., made from LYCRA^{®} and other elastomeric fibers). In another example, the mesh layer 110 may be abrasion and puncture resistant. In another example, the mesh layer 110 may be either electrostatically dissipative or conductive. In another example, the mesh layer 110 may be thermally conductive. In another example, the mesh layer 110 may be phosphorescent (photoluminescent). In some cases, the mesh layer 110 may also be magnetic.

In some embodiments, the mesh layer 110 includes a mesh fabric. For example, the plurality of interconnected portions 112 of the mesh layer 110 may include any suitable bondable yarns, such as spun yarns (e.g., spun yarns composed of cotton fibers and/or polyester fibers). The mesh fabric may include knit fabrics, open weave fabrics, woven meshes/screens (e.g., wire mesh or fiberglass mesh), unitary meshes (e.g., unitary continuous plastic screens), or perforated nonporous (e.g., sealed) fabrics. In some embodiments, the mesh fabric may include an integral loop substrate, especially in the case of knit fabrics.

The retroreflective article 100 further includes a bond layer 120. The bond layer 120 includes a plurality of bond portions 122 at least partially spaced apart from each other by the mesh layer 110. Further, each of the plurality of bond portions 122 is at least partially disposed within a corresponding enclosed opening 114 from the plurality of enclosed openings 114. Specifically, at least a portion of adjacent bond portions 122 may be spaced apart from each other by a corresponding interconnected portion 112 from the plurality of interconnected portions 112 of the mesh layer 110. As a result, at least one interconnected portion 112 from the plurality of interconnected portions 112 may be disposed between adjacent bond portions 122 from the plurality of bond portions 122.

Each of the plurality of bond portions 122 is fixedly bonded to one or more adjacent interconnected portions 112 from the plurality of interconnected portions 112. In other words, each of the plurality of bond portions 122 may not de-bond or disconnect from the one or more adjacent interconnected portions 112. The plurality of bond portions 122 is not intended to be de-bonded or disconnected from the plurality of interconnected portions 112 during use of the retroreflective article 100.

Each of the plurality of bond portions 122 is spaced apart from the first mesh major surface 110A along the thickness 110T of the mesh layer 110. As illustrated in FIG. 1, each of the plurality of bond portions 122 is disposed below the first mesh major surface 110A. Further, the second mesh major surface 110B is proximal to the bond layer 120. In other words, the second mesh major surface 110B is proximal to each of the plurality of bond portions 122 of the bond layer 120.

In the illustrated embodiment of FIG. 1, the bond layer 120 is disposed between the first mesh major surface 110A and the second mesh major surface 110B along the thickness 110T of the mesh layer 110. Specifically, each of the plurality of bond portions 122 of the bond layer 120 is disposed within the corresponding enclosed opening 114, such that they are located between the first mesh major surface 110A and the second mesh major surface 110B along the thickness 110T of the mesh layer 110. As a result, each of the plurality of bond portions 122 is spaced apart from the first mesh major surface 110A and the second mesh major surface 110B along the thickness 110T of the mesh layer 110. This may facilitate reduction of the thickness of the retroreflective article 100, thereby allowing the retroreflective article 100 to be very thin (e.g., about 0.25 mm, or about 0.20 mm, or about 0.15 mm, or about 0.10 mm, or about 0.05 mm). It will be appreciated that in actual industrial production of the retroreflective article 100, small-scale statistical fluctuations may inevitably be present that may result in a small amount of the bond layer 120 to be present on the second mesh major surface 110B. Such occasional occurrences are to be expected in any real-life production process; however, the bond layer 120 of the retroreflective article 100, as described above, is distinguished from circumstances in which the bond layer 120 is purposefully arranged in a continuous manner (i.e., portions thereof are not spaced apart from each other by the mesh layer 110).

In some embodiments, the bond layer 120 may include more than 20 weight percent of a polymeric binder. In some embodiments, the bond layer 120 includes a colorant and the polymeric binder. Specifically, in some embodiments, the bond layer 120 may include a flexible polymeric binder material that is colored in some fashion. The bond layer 120 may further include additives, such as UV stabilizers, antioxidants, UV absorbers, property modifiers, performance enhancers, or combinations thereof.

The polymeric binder of the bond layer 120 may include, but is not limited to, an elastomer. Specifically, the polymeric binder may include a cross-linked or virtually cross-linked elastomer. A cross-linked elastomer means that polymeric chains of the elastomer are chemically cross-linked to form a three dimensional network which is stabilized against molecular flow. A virtually cross-linked elastomer means that the polymeric chain mobility of the elastomer is greatly reduced by chain entanglement and/or by hydrogen bonding, resulting in an increase in the cohesive or internal strength of the polymer. Examples of such polymer cross-linking include carbon-carbon bond formation such as: free radical bonding between vinyl groups between chains; agent or group coupling such as by vulcanization or reaction with a coupling agent, such as a diol in the case of isocyanate or epoxy functionalized polymers; a diisocyanate or an activated ester in the case of amine and alcohol functionalized polymers; and epoxides and diols in the case of carboxylic acid or anhydride functionalized polymers. Examples of such virtual cross-linking include amide hydrogen bonding as is found in polyamides or crystalline and amorphous region interactions as is found in block copolymers of styrene and acrylonitrile.

Examples of the polymers that may be employed in the polymeric binder include polyolefins, polyesters, polyurethanes, polyepoxides, polyacrylates, natural and synthetic rubbers, and combinations thereof. Examples of cross-linked polymers include the foregoing examples of polymers substituted with cross-linkable groups such as epoxide groups, olefinic groups, isocyanate groups, alcohol groups, amine groups, anhydride groups, or acrylate groups. Multifunctional monomers and oligomers which react with functional groups of the polymers may also be used as cross-linkers.

Specific examples of materials for the bond layer 120 are disclosed in U.S. Pat. Nos. 5,200,262 and 5,283,101. In the '262 patent, the materials for the bond layer 120 includes one or more flexible polymers having active hydrogen functionalities, such as crosslinked urethane-based polymers (for example, isocyanate cured polyesters or one of two component polyurethanes) and one or more isocyanate-functional silane coupling agents. In the '101 patent, the materials for the bond layer 120 includes an electron-beam cured polymer selected from the group consisting of chlorosulfonated polyethylenes, ethylene copolymers including at least about 70 weight percent polyethylene, and poly(ethylene-co-propylene-co diene) polymers.

The retroreflective article 100 further includes a plurality of sets 131 of optical elements 130 corresponding to the plurality of bond portions 122 of the bond layer 120. Each of the sets 131 of optical elements 130 includes a plurality of optical elements 130 partially embedded within a corresponding bond portion 122 from the plurality of bond portions 122 of the bond layer 120.

The sets 131 of optical elements 130 are spaced apart from each other by the one or more interconnected portions 112 of the mesh layer 110. Therefore, each of the sets 131 of optical elements 130 is discrete and disposed between adjacent interconnected portions 112. The sets 131 of optical elements 130 are disposed proximal to the first mesh major surface 110A. In other words, the first mesh major surface 110A is proximal to the sets 131 of optical elements 130.

Such an arrangement of the retroreflective article 100 may thus be distinguished from, for example, an approach in which the mesh layer 110 is not disposed between the plurality of bond portions 122 and the sets 131 of optical elements 130.

In the illustrated embodiment of FIG. 1, the retroreflective article 100 further includes a reflective layer 140 disposed adjacent to a surface 132 of at least some of the plurality of optical elements 130 facing the bond layer 120. The surface 132, adjacent to which the reflective layer 140 is disposed, faces the bond layer 120. Therefore, in some embodiments, the reflective layer 140 is at least partially disposed between the plurality of optical elements 130 and the bond layer 120. In one example, the reflective layer 140 may be disposed adjacent to the surface 132 via vapor deposition. During vapor deposition, in some cases, the reflective layer 140 may be further disposed on the second mesh major surface 110B of the mesh layer 110. Alternatively, in some embodiments, reflective particles (such as pearlescent pigments) may be added to the bond layer 120, such as what is described in U.S. Pat. No. 32,28,897 (Nellessen). In these embodiments, the reflective layer 140 is located within the bond layer 120.

The plurality of optical elements 130 and the reflective layer 140 may collectively return a substantial quantity of incident light towards a light source. That is, light that passes into and through the plurality of optical elements 130 is reflected by the reflective layer 140 to again reenter the plurality of optical elements 130, such that the light is steered to return toward the light source, in the general manner signified by the term "retroreflection".

In some embodiments, each of the plurality of optical elements 130 includes a transparent microsphere. In some embodiments, each of the plurality of optical elements 130 may include glass. For example, each of the plurality of optical elements 130 may be a transparent microsphere made substantially of glass. In some embodiments, each of the plurality of optical elements 130 has a diameter 130D. The diameters 130D of the plurality of optical elements 130 have a median diameter (D50). In some embodiments, the median diameter of the plurality of optical elements is from about 0.015 mm to about 0.2 mm. In some embodiments, the median diameter is about 0.05 mm, about 0.06 mm, about 0.07 mm, about 0.08 mm, about 0.09 mm, about 0.1 mm, about 0.12 mm, about 0.14 mm, about 0.16 mm, or about 0.18 mm.

The thickness 110T of the mesh layer 110 may be selected based on the median diameter of the plurality of optical elements 130 and vice-versa. For example, the median diameter of the plurality of optical elements 130 may be less than the thickness 110T of the mesh layer 110. In some embodiments, a minimum thickness (i.e., a minimum value of the thickness 110T) of the mesh layer 110 is greater than the median diameter of the plurality of optical elements 130 by a factor of at least 2.

In some embodiments, the reflective layer 140 includes a metal mirror or a dielectric mirror. The metal mirror may include elemental metal in pure or alloy form, which is capable of reflecting light, preferably specularly reflecting light. The metal may be a continuous coating produced by vacuum-deposition, vapor coating chemical-deposition, or electroless plating. In some examples, the metal mirror may be printed or transferred, as disclosed in U.S. Patent Application Publication No. 20200264349 (Chen-Ho et al.). The metal mirror of the reflective layer 140 may have a thickness (along the z-axis) ranging from about 10 nanometers (nm) to about 500 nm.

A variety of metals may be used to provide a specularly reflective metal mirror. These include aluminum, silver, chromium, nickel, magnesium, gold, tin, and the like, in elemental form. Aluminum and silver are preferred metals for use in the metal mirror as they tend to provide good retroreflective brightness. In the case of aluminum and silver, some of the metal may be in the form of the metal oxide and/or hydroxide.

The dielectric mirror may also be referred to as a dichroic mirrors, Bragg reflectors, 1-D photonic crystals, or visible light reflectors (VLRs, i.e., when tuned to partially transmit and partially reflect light in the visible spectrum (i.e., from 400 nm to 700 nm)), which are each generally understood to those of skill in the art to at least partially reflect light within a desired band of wavelengths by employing alternating high and low refractive index layers. The dielectric mirror may be at least partially reflective and at least partially transparent. The term dielectric is used to refer to non-metallic and non-electrically conducting materials.

Typically, the dielectric mirror has a multi-layer construction. For example, the dielectric mirror may include a plurality of layers deposited, e.g., by layer-by-layer self-assembly. The dielectric mirror can include alternating stacks of optical thin films with different refractive indexes (RIs)-e.g., a "high" RI and a "low" RI. The interfaces between stacks with different RIs produce phased reflections, selectively reinforcing certain wavelengths (constructive interference) and cancelling other wavelengths (destructive interference). By selecting certain variables such as stack thickness, refractive indices, and number of the stacks, the band(s) of reflected and/or transmitted wavelengths can be tuned and made as wide or as narrow as desired. The dielectric mirror of the reflective layer 140 may have a thickness (along the z-axis) ranging from about 10 nanometers nm to about 500 nm.

In the illustrated embodiment of FIG. 1, the retroreflective article 100 further incudes an interlayer 145 at least partially disposed between the plurality of optical elements 130 and the reflective layer 140. The interlayer 145 may have a thickness (along the z-axis) from about 5 nm to about 0.03 mm. In some examples, the interlayer 145 may have various thickness along the length and/or the breadth of the retroreflective article 100, i.e., its thickness may be zero or may approach zero. In one example, the interlayer 145 may be disposed substantially on the surface 132 of the plurality of optical elements 130 and may not be disposed between adjacent optical elements 130 from the plurality of optical elements 130. In some other examples, the thickness the interlayer 145 may be less adjacent to the surface 132 of the plurality of optical elements 130, and the thickness the interlayer 145 may be greater between adjacent optical elements 130 from the plurality of optical elements 130.

The interlayer 145 may include a polymeric material. The interlayer 145 may preferably include a polymer that is linked to a silane coupling agent. To provide good laundering durability, the polymer preferably is a crosslinked polymer. Examples of polymers that may be suitable for the interlayer 145 include those that contain units of urethane, ester, ether, urea, epoxy, carbonate, acrylate, acrylic, olefin, vinyl chloride, amide, alkyd, or combinations thereof.

The polymer that is used in interlayer 145 may have functional groups that allow the polymer to be linked to the silane coupling agent, or the reactants that form the polymer may possess such functionality. For example, in producing polyurethanes, the starting materials may possess hydrogen functionalities that are capable of reacting with an isocyanate-functional silane coupling agent; see for example, U.S. Pat. No. 5,200,262 to Li. Preferred polymers are crosslinked poly(urethane-ureas) and crosslinked poly(acrylates).

Poly(urethane-ureas) may be formed by reacting a hydroxy-functional polyester resin with excess polyisocyanate. Alternatively, a polypropylene oxide diol may be reacted with a diisocyanate and then with a triamino-functionalized polypropylene oxide. Crosslinked poly(acrylates) may be formed by exposing acrylate oligomers to electron beam radiation; see for example, U.S. Pat. No. 5,283,101 to Li.

In some embodiments, the retroreflective article 100 further includes an adhesive layer 150 disposed on at least one of the second mesh major surface 110B of the mesh layer 110 and the bond layer 120 opposite to the plurality of optical elements 130. In the illustrated embodiment of FIG. 1, the adhesive layer 150 is disposed on each of the second mesh major surface 110B of the mesh layer 110 and the bond layer 120 opposite to the plurality of optical elements 130. The adhesive layer 150 may be applied to the mesh layer 110 and/or the bond layer 120 by, for example, liquid-coating, spraying, extrusion, lamination, and the like.

The adhesive layer 150 includes an adhesive. In some embodiments, the adhesive is one of a pressure sensitive adhesive and a hot-melt adhesive. In some embodiments, the adhesive may include a pressure sensitive adhesive, a heat activated adhesive, a laminating adhesive, or a combination of different types of adhesives. A wide variety of pressure sensitive adhesives are suitable, including tackified natural rubbers, synthetic rubbers, tackified styrene block copolymers, polyvinyl ethers, poly (meth)acrylates, polyurethanes, polyureas, poly-alpha-olefins, and silicones. The pressure sensitive adhesive may be covered with a release liner to protect the adhesive prior to adhesion to a substrate. Heat activated adhesives are similar to pressure sensitive adhesives, but require the application of heat to become tacky. One advantage of heat activated adhesives is that they typically do not require a release liner to protect the adhesive layer prior to adhesion to a substrate because they are not tacky at room temperature. Examples of laminating adhesives include hot-melt adhesives, adhesive dispersions and suspensions, and curing adhesives, such as cyanoacrylates.

However, in some other embodiments, the adhesive layer 150 may be omitted from the retroreflective article 100. In such embodiments, the retroreflective article 100 may be attached to a garment, for example, by sewing or stitching, by ultrasonic bonding, by use of hook and loop fasteners, and the like. One example of hook and loop mechanism include loops disposed on the second mesh major surface 110B of the mesh layer 110 and hooks disposed on a garment on which the retroreflective article 100 is to be attached.

The retroreflective article 100 may be very thin (e.g., have a thickness of about 0.25 mm, or about 0.20 mm, or about 0.15 mm, or about 0.10 mm, or about 0.05 mm). In some cases, the retroreflective article 100 may be as thin as the mesh layer 110 (having the thickness 110T). Such low thickness may provide a good/soft hand feel and high drapability to the retroreflective article 100. Further, the mesh layer 110 may form a portion of an external surface of a garment to which the retroreflective article 100 is attached. Consequently, the mesh layer 110 may provide physical support and excellent abrasion resistance to the retroreflective article 100.

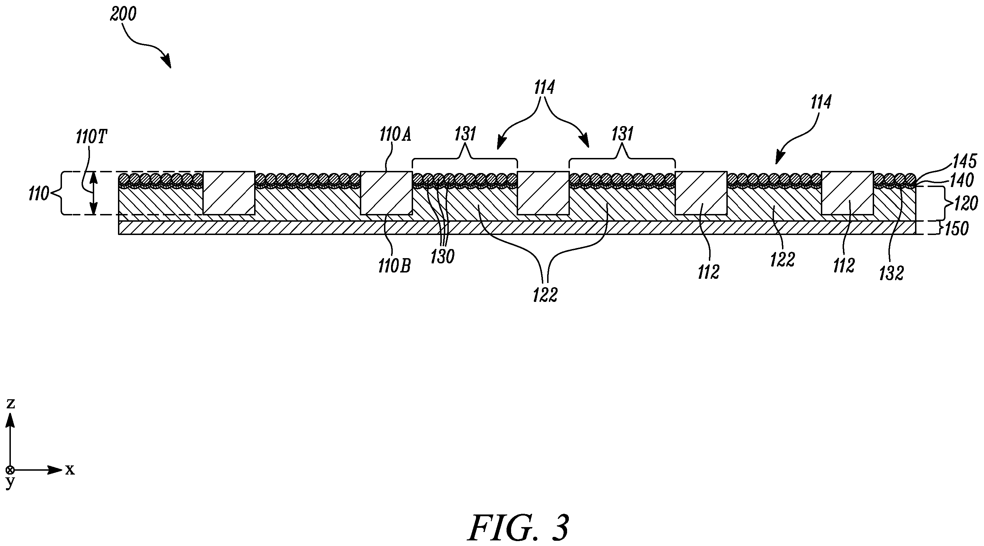

FIG. 3 illustrates a schematic cross-sectional view of a retroreflective article 200 according to another embodiment of the present disclosure. The retroreflective article 200 is similar to the retroreflective article 100 of FIG. 1, with like elements designated by like reference characters. However, the retroreflective article 200 has a different configuration of the bond layer 120. Specifically, in the illustrated embodiment of FIG. 3, each of the plurality of bond portions 122 extends below the second mesh major surface 110B of the mesh layer 110 along the thickness 110T of the mesh layer 110. Further, in the illustrated embodiment of FIG. 3, the adhesive layer 150 is disposed on the bond layer 120 opposite to the plurality of optical elements 130.

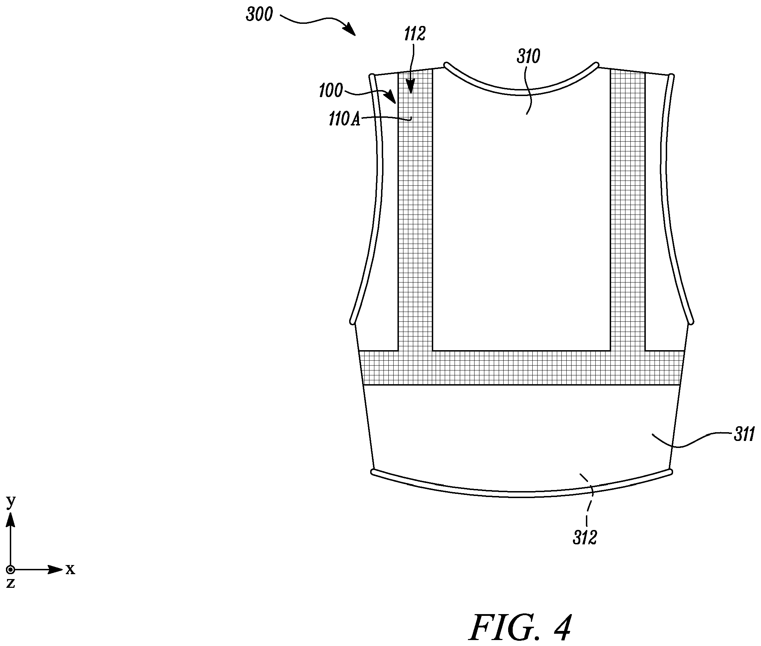

FIG. 4 illustrates a schematic front view of a garment 300. The garment 300 is illustrated in the form of a vest. However, the garment 300 may take form of, e.g., a jacket, a shirt (long-sleeve or short-sleeve), a pair of trousers, a pair of shoes, a coverall, and the like.

The garment 300 includes a body 310. The body 310 may be made of a fabric (e.g., a breathable fabric), a leather material (e.g., for shoes), and so forth. The body 310 defines an external surface 311, much or all of which is visible when the garment 300 is worn, and an internal surface 312, much or all of which is not visible when the garment 300 is worn.

The garment 300 further includes the retroreflective article 100 or the retroreflective article 200 (shown in FIG. 3). For explanatory purposes, the garment 300 will be described with reference to the retroreflective article 100, however, the same concepts may be applied with the retroreflective article 200.

The retroreflective article 100 may be attached to the body 310, such that the first mesh major surface 110A of the mesh layer 110 forms at least a portion of the external surface 311 of the garment 300. The retroreflective article 100 may be attached to the body 310 by any suitable means. For example, the retroreflective article 100 may be attached to the body 310 by stitches, staples, adhesive, thermal or ultrasonic bonding, or by any other suitable means. In some embodiments, the adhesive layer 150 (shown in FIG. 1) may bond the retroreflective article 100 to the body 310, such that the first mesh major surface 110A of the mesh layer 110 forms at least a portion of the external surface 311 of the garment 300. In some cases, the second mesh major surface 110B may enhance a surface bonding strength between the retroreflective article 100 and the garment 300 (e.g., via a loop on the second mesh major surface 110B).

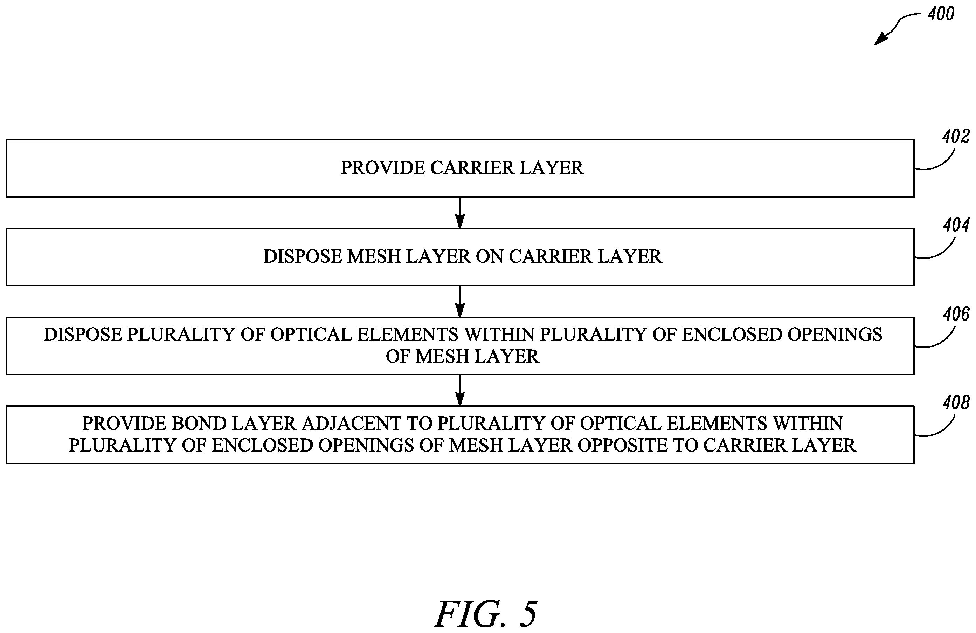

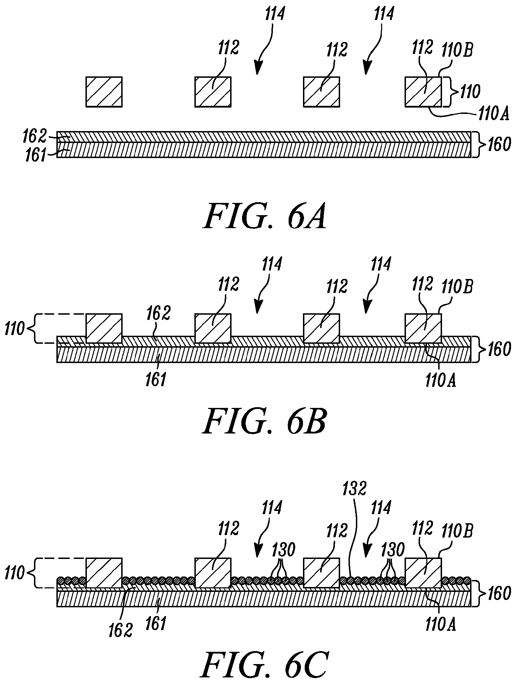

FIG. 5 illustrates a flowchart depicting various steps of a method 400 of manufacturing a retroreflective article. The method 400 may be used to manufacture the retroreflective article 100 of FIG. 1. The method 400 may further be used to manufacture the retroreflective article 200 of FIG. 3. Various steps of the method 400 are also illustrated in FIGS. 6A-6H. The method 400 will be described with reference to FIGS. 1, 5, and 6A-6H.

At step 402, the method 400 includes providing a carrier layer. For example, the method 400 may include providing a carrier layer 160 (shown in FIG. 6A).

In some embodiments, the carrier layer includes a liner and a carrier bonding layer. As shown in FIG. 6A, in some embodiments, the carrier layer 160 includes a liner 161 and a carrier bonding layer 162. The carrier bonding layer 162 may be disposed on the liner 161. The carrier bonding layer 162 may be configured to temporarily bond with the mesh layer 110. In some embodiments, the carrier bonding layer 162 may include a polymer (e.g., polyethylene). Further, the liner 161 may include any suitable material (e.g., a paper material) on which the carrier bonding layer 162 may be disposed.

At step 404, the method 400 further includes disposing a mesh layer on the carrier layer. The mesh layer includes a plurality of interconnected portions defining a plurality of enclosed openings therebetween, a first mesh major surface, and a second mesh major surface opposite to the first mesh major surface. The plurality of interconnected portions together form the first mesh major surface and the second mesh major surface. The first mesh major surface is disposed on the carrier layer. For example, the mesh layer 110 may include the plurality of interconnected portions 112 defining the plurality of enclosed openings 114 therebetween. The mesh layer 110 may include the first mesh major surface 110A and the second mesh major surface 110B opposite to the first mesh major surface 110A. The plurality of interconnected portions 112 may together form the first mesh major surface 110A and the second mesh major surface 110B. As shown in FIG. 6B, the method 400 may include disposing the mesh layer 110 on the carrier layer 160. Specifically, the method 400 may include disposing the first mesh major surface 110A of the mesh layer 110 on the carrier layer 160.

In some embodiments, disposing the mesh layer on the carrier layer further includes removably bonding the carrier layer to the mesh layer. For example, disposing the mesh layer 110 on the carrier layer 160 may include removably bonding the carrier layer 160 to the mesh layer 110. Specifically, the carrier bonding layer 162 may removably bond to the mesh layer 110 and prevent unwanted delamination of the mesh layer 110 from the carrier layer 160 during manufacture of the retroreflective article. The mesh layer 110 may removably bond to the carrier bonding layer 162 by heat lamination.

At step 406, the method 400 further includes disposing a plurality of optical elements within the plurality of enclosed openings of the mesh layer. For example, as shown in FIG. 6C, the method 400 may include disposing the plurality of optical elements 130 within the plurality of enclosed openings 114 of the mesh layer 110.

In some embodiments, disposing the plurality of optical elements within the plurality of enclosed openings further includes disposing the plurality of optical elements on the carrier layer. For example, disposing the plurality of optical elements 130 within the plurality of enclosed openings 114 may include disposing the plurality of optical elements 130 on the carrier layer 160. The carrier bonding layer 162 of the carrier layer 160 may removably bond to the plurality of optical elements 130 and prevent unwanted delamination of the plurality of optical elements 130 from the carrier layer 160 during manufacture of the retroreflective article. The plurality of optical elements 130 may removably bond to the carrier bonding layer 162 by heat. Advantageously, the mesh layer 110 may protect the plurality of optical elements 130 during manufacturing. Specifically, the mesh layer 110 may prevent delamination and loss of some of the plurality of optical elements 130 due to abrasion/static produced by winding and unwinding during manufacturing.

At step 408, the method 400 further includes providing a bond layer adjacent to the plurality of optical elements within the plurality of enclosed openings of the mesh layer opposite to the carrier layer, such that the plurality of optical elements is partially embedded within the bond layer. The bond layer fixedly bonds to the plurality of interconnected portions of the mesh layer.

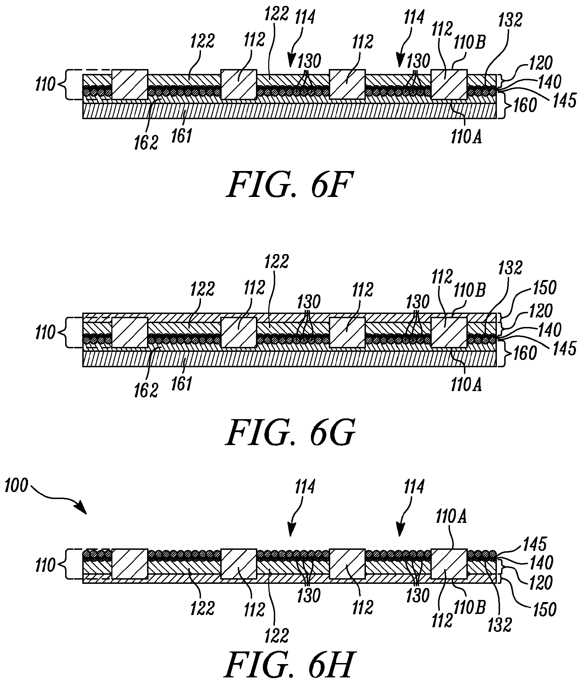

For example, as shown in FIG. 6F, the method 400 may include providing the bond layer 120 at least partially on the reflective layer 140 within the plurality of enclosed openings 114 of the mesh layer 110, such that the plurality of optical elements 130 is partially embedded within the bond layer 120. The bond layer 120 may fixedly bond to the plurality of interconnected portions 112 of the mesh layer 110. The bond layer 120 may thus be at least partially segmented and form the plurality of bond portions 122 within corresponding plurality of enclosed openings 114 of the mesh layer 110. As shown in FIG. 6F, the bond layer 120 may be provided on the reflective layer 140 opposite to the carrier layer 160. A thickness of the bond layer 120 may reduce after the bond layer 120 dries.

As shown in FIG. 3, in some embodiments, the plurality of bond portions 122 of the bond layer 120 may be at least partially spaced apart by the mesh layer 110. This may be achieved by a normal coating/drying process to form the bond layer 120. As shown in FIG. 1, in some embodiments, the plurality of bond portions 122 of the bond layer 120 may be completely spaced apart from each other. The plurality of bond portions 122 may be completely spaced apart from each other, for example, when the mesh layer 110 has hydrophobicity to repel a solution of the bond layer 120 during coating or drying process. Alternatively, the plurality of bond portions 122 may be completely spaced apart from each other, for example, by registered printing, where a solution of the bond layer 120 is only delivered into the plurality of enclosed openings 114 of the mesh layer 110.

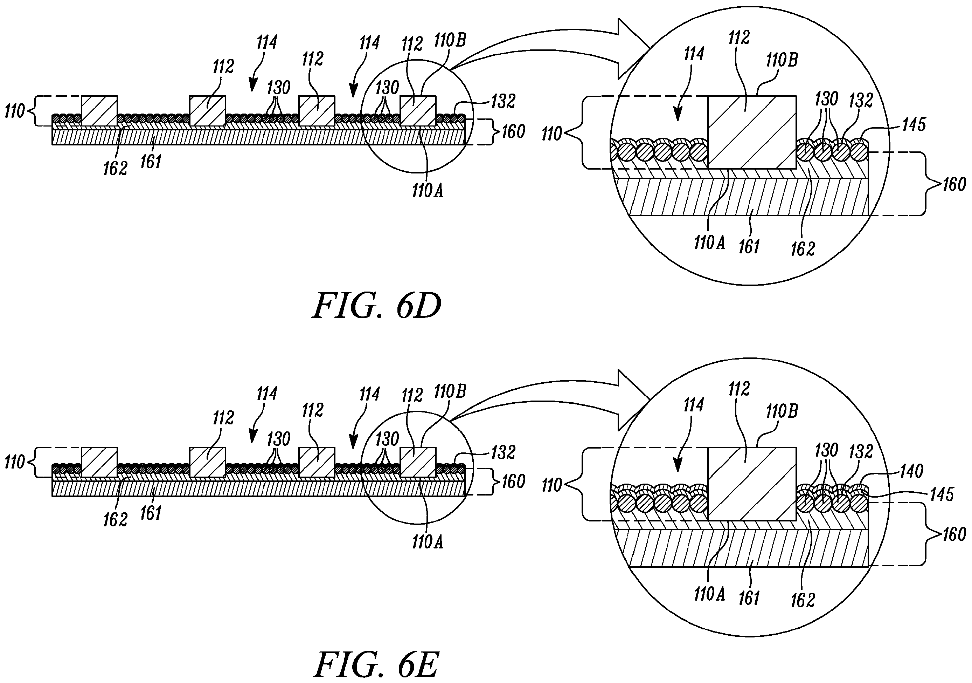

In some embodiments, the method 400 further includes providing a reflective layer adjacent to a surface of at least some of the plurality of optical elements prior to providing the bond layer, such that the reflective layer is at least partially disposed between the bond layer and the plurality of optical elements. For example, as shown in FIG. 6E, the method 400 may include providing the reflective layer 140 adjacent to the surface of 132 of at least some of the plurality of optical elements 130 prior to providing the bond layer 120, such that the reflective layer 140 is at least partially disposed between the bond layer 120 and the plurality of optical elements 130. The reflective layer 140 may be provided, for example, via vapor deposition. In some cases, the reflective layer 140 may be further disposed on the second mesh major surface 110B of the mesh layer 110.

In some embodiments, the method 400 further includes providing an interlayer on at least some of the plurality of optical elements prior to providing the reflective layer. For example, as shown in FIG. 6D, the method 400 may include providing the interlayer 145 on at least some of the plurality of optical elements 130 prior to providing the reflective layer 140.

In some embodiments, the method 400 further includes providing an adhesive layer on at least one of the second mesh major surface of the mesh layer and the bond layer opposite to the plurality of optical elements. For example, as shown in FIG. 6G, the method 400 may further include providing the adhesive layer 150 on at least one of the second mesh major surface 110B of the mesh layer 110 and the bond layer 120 opposite to the plurality of optical elements 130. Specifically, as shown in FIG. 6G, in some cases, the method 400 may further include providing the adhesive layer 150 on each of the second mesh major surface 110B of the mesh layer 110 and the bond layer 120 opposite to the plurality of optical elements 130.

In some embodiments, the method 400 further includes removing the carrier layer from the mesh layer and the plurality of optical elements 130. For example, as shown in FIG. 6H, the method 400 may include removing the carrier layer 160 from the mesh layer 110 and the plurality of optical elements 130. Since the bond layer 120 is fixedly bonded to the one or more adjacent interconnected portions 112 from the plurality of interconnected portions 112 of the mesh layer 110, a bond strength between the bond layer 120 and the one or more interconnected portions 112 of the mesh layer 110 is greater than a bond strength between the mesh layer 110 and the carrier layer 160. Further, a bond strength between the bond layer 120 and the plurality of optical elements 130 is greater than a bond strength between the plurality of optical elements 130 and the carrier layer 160. After removal of the carrier layer 160, the final product (e.g., the retroreflective article 100) may be formed.

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate implementations can be substituted for the specific embodiments shown and described without departing from the scope of the present disclosure. This application is intended to cover any adaptations or variations of the specific embodiments discussed herein. Therefore, it is intended that this invention be limited only by the claims.

## Claims

1. A method (400) of manufacturing a retroreflective article (100, 200), the method (400) comprising:
providing a carrier layer (160);
disposing a mesh layer (110) on the carrier layer (160), the mesh layer (110) comprising a plurality of interconnected portions (112) defining a plurality of enclosed openings (114) therebetween, a first mesh major surface (110A), and a second mesh major surface (110B) opposite to the first mesh major surface (110A), wherein the first mesh major surface (110A) is disposed on the carrier layer (160);
disposing a plurality of optical elements (130) within the plurality of enclosed openings (114) of the mesh layer (110); and
providing a bond layer (120) adjacent to the plurality of optical elements (130) within the plurality of enclosed openings (114) of the mesh layer (110) opposite to the carrier layer (160), such that the plurality of optical elements (130) is partially embedded within the bond layer (120), wherein the bond layer (120) fixedly bonds to the plurality of interconnected portions (112) of the mesh layer (110).

2. The method (400) of claim 1, further comprising providing a reflective layer (140) adjacent to a surface of at least some of the plurality of optical elements (130) prior to providing the bond layer (120), such that the reflective layer (140) is at least partially disposed between the bond layer (120) and the plurality of optical elements (130).

3. The method (400) of claim 2, further comprising providing an interlayer (145) on at least some of the plurality of optical elements (130) prior to providing the reflective layer (140).

4. The method (400) of claim 1, further comprising removing the carrier layer (160) from the mesh layer (110) and the plurality of optical elements (130).

5. The method (400) of claim 1, further comprising providing an adhesive layer (150) on at least one of the second mesh major surface of the mesh layer (110) and the bond layer (120) opposite to the plurality of optical elements (130).

6. The method (400) of claim 1, wherein disposing the mesh layer (110) on the carrier layer (160) further comprises removably bonding the carrier layer (160) to the mesh layer (110).

7. The method (400) of claim 6, wherein the carrier layer (160) comprises a liner (161) and a carrier bonding layer (162) bonding the liner (161) to the mesh layer (110).

8. The method (400) of claim 1, wherein disposing the plurality of optical elements (130) within the plurality of enclosed openings (114) further comprises disposing the plurality of optical elements (130) on the carrier layer (160).

## Patentansprüche

1. Ein Verfahren (400) zum Herstellen eines retroreflektierenden Gegenstands (100, 200), das Verfahren (400) aufweisend:
Bereitstellen einer Trägerschicht (160);
Anordnen einer Gitterschicht (110) auf der Trägerschicht (160), die Gitterschicht (110) aufweisend eine Mehrzahl von miteinander verbundenen Abschnitten (112), die eine Mehrzahl von umschlossenen Öffnungen (114) dazwischen definieren, eine erste Gitterhauptoberfläche (110A) und eine zweite Gitterhauptoberfläche (110B) der ersten Gitterhauptoberfläche (110A) gegenüberliegend, wobei die erste Gitterhauptoberfläche (110A) auf der Trägerschicht (160) angeordnet ist;
Anordnen einer Mehrzahl von optischen Elementen (130) innerhalb der Mehrzahl von umschlossenen Öffnungen (114) der Gitterschicht (110); und
Bereitstellen einer Bindungsschicht (120) angrenzend an die Mehrzahl von optischen Elementen (130) innerhalb der Mehrzahl von umschlossenen Öffnungen (114) der Gitterschicht (110) der Trägerschicht (160) gegenüberliegend, derart, dass die Mehrzahl von optischen Elementen (130) teilweise innerhalb der Bindungsschicht (120) eingebettet ist, wobei die Bindungsschicht (120) sich mit der Mehrzahl von miteinander verbundenen Abschnitten (112) der Gitterschicht (110) fest verbindet.

2. Das Verfahren (400) nach Anspruch 1, ferner aufweisend das derartige Bereitstellen einer reflektierenden Schicht (140) angrenzend an eine Oberfläche von mindestens einigen der Mehrzahl von optischen Elementen (130) vor dem Bereitstellen der Bindungsschicht (120), dass die reflektierende Schicht (140) mindestens teilweise zwischen der Bindungsschicht (120) und der Mehrzahl von optischen Elementen (130) angeordnet ist.

3. Das Verfahren (400) nach Anspruch 2, ferner aufweisend das Bereitstellen einer Zwischenschicht (145) auf mindestens einigen der Mehrzahl von optischen Elementen (130) vor dem Bereitstellen der reflektierenden Schicht (140).

4. Das Verfahren (400) nach Anspruch 1, ferner aufweisend ein Entfernen der Trägerschicht (160) von der Gitterschicht (110) und der Mehrzahl von optischen Elementen (130).

5. Das Verfahren (400) nach Anspruch 1, ferner aufweisend das Bereitstellen einer Klebeschicht (150) auf mindestens einer der zweiten Gitterhauptoberfläche der Gitterschicht (110) und der Bindungsschicht (120) gegenüberliegend von der Mehrzahl von optischen Elementen (130).

6. Das Verfahren (400) nach Anspruch 1, wobei das Anordnen der Gitterschicht (110) auf der Trägerschicht (160) ferner ein lösbares Binden der Trägerschicht (160) mit der Gitterschicht (110) aufweist.

7. Das Verfahren (400) nach Anspruch 6, wobei die Trägerschicht (160) einen Liner (161) und eine Trägerbindungsschicht (162) aufweist, die den Liner (161) mit der Gitterschicht (110) bindet.

8. Das Verfahren (400) nach Anspruch 1, wobei das Anordnen der Mehrzahl von optischen Elementen (130) innerhalb der Mehrzahl von umschlossenen Öffnungen (114) ferner das Anordnen der Mehrzahl von optischen Elementen (130) auf der Trägerschicht (160) aufweist.

## Revendications

1. Procédé (400) de fabrication d'un article rétroréfléchissant (100, 200), le procédé (400) comprenant :
la fourniture d'une couche porteuse (160) ;
la disposition d'une couche de maille (110) sur la couche porteuse (160), la couche de maille (110) comprenant une pluralité de parties interconnectées (112) définissant une pluralité d'ouvertures enfermées (114) entre elles, une première surface principale de maille (110A) et une seconde surface principale de maille (110B) opposée à la première surface principale de maille (110A), dans lequel la première surface principale de maille (110A) est disposée sur la couche porteuse (160) ;
la disposition d'une pluralité d'éléments optiques (130) à l'intérieur de la pluralité d'ouvertures enfermées (114) de la couche de maille (110) ; et
la fourniture d'une couche de liaison (120) adjacente à la pluralité d'éléments optiques (130) à l'intérieur de la pluralité d'ouvertures enfermées (114) de la couche de maille (110) à l'opposé de la couche porteuse (160), de telle sorte que la pluralité d'éléments optiques (130) est partiellement incorporée dans la couche de liaison (120), dans lequel la couche de liaison (120) se lie de manière fixe à la pluralité de parties interconnectées (112) de la couche de maille (110).

2. Procédé (400) selon la revendication 1, comprenant en outre la fourniture d'une couche réfléchissante (140) adjacente à une surface d'au moins certains parmi la pluralité d'éléments optiques (130) avant la fourniture de la couche de liaison (120), de telle sorte que la couche réfléchissante (140) est au moins partiellement disposée entre la couche de liaison (120) et la pluralité d'éléments optiques (130).

3. Procédé (400) selon la revendication 2, comprenant en outre la fourniture d'une couche intermédiaire (145) sur au moins certains parmi la pluralité d'éléments optiques (130) avant la fourniture de la couche réfléchissante (140).

4. Procédé (400) selon la revendication 1, comprenant en outre le retrait de la couche porteuse (160) de la couche de maille (110) et de la pluralité d'éléments optiques (130).

5. Procédé (400) selon la revendication 1, comprenant en outre la fourniture d'une couche adhésive (150) sur au moins une parmi la seconde surface principale de maille (110B) de la couche de maille (110) et la couche de liaison (120) opposée à la pluralité d'éléments optiques (130).

6. Procédé (400) selon la revendication 1, dans lequel la disposition de la couche de maille (110) sur la couche porteuse (160) comprend en outre la liaison amovible de la couche porteuse (160) à la couche de maille (110).

7. Procédé (400) selon la revendication 6, dans lequel la couche porteuse (160) comprend une doublure (161) et une couche de liaison porteuse (162) liant la doublure (161) à la couche de maille (110).

8. Procédé (400) selon la revendication 1, dans lequel la disposition de la pluralité d'éléments optiques (130) à l'intérieur de la pluralité d'ouvertures enfermées (114) comprend en outre la disposition de la pluralité d'éléments optiques (130) sur la couche porteuse (160).
